# EUROPEAN PATENT APPLICATION

(11) **EP 1 868 090 A1**
(43) Date of publication of application: **19.12.2007**
(21) Application number: 06722209.1
(22) Date of filing: 30.03.2006
(51) Int. Cl.: G06F 9/45

(54) **A METHOD AND DEVICE FOR PATTERN MATCHING AND PARSING ON ABNF CHARACTER STRING**

(30) Priority: 30.03.2005 CN 200510059650
(71) Applicant: Huawei Technologies Co., Ltd., Longgang District, Shenzhen Guangdong 518129 (CN); University of Science and Technology of China, Hefei, Anhui 230026 (CN)
(72) Inventor: ZHAO, Baohua, Anhui 230026 (CN); JIN, Zhiwei, Anhui 230026 (CN); QU, Yugui, Anhui 230026 (CN); ZHOU, Hao, Anhui 230026 (CN); WANG, Shuo, Anhui 230026 (CN); LI, Qiyue, Anhui 230026 (CN); LV, Chao, Anhui 230026 (CN); TIAN, Ye, Anhui 230026 (CN)
(74) Representative: Epping - Hermann - Fischer
(86) International application number: PCT/CN2006/000557
(87) International publication number: WO 2006/102849

(57) **Abstract**

A method and device for pattern matching and parsing on the character string based on ABNF grammar. The method comprises: defining a set of instructions which adapts to describe the character string pattern rule; designing a compiler, by which the protocol rule described by the ABNF grammar is translated into the protocol rule and target code described by the set of instructions; designing a hardware parser according to the characteristic of the set of instructions, the parser including a module realized by a special hardware for supporting the corresponding instruction, thereby it is achieved for pattern matching and parsing on the character string.

## Description

### Field of the Invention

The present invention relates to the technical field of network communications, in particular, to a method and a device for ANBF string pattern matching and parsing.

### Background of the Invention

ABNF (Augmented BNF) is a syntax definition for matching string pattern defined by IETF (Internet Engineering Task Force) in RFC2234. ABNF is an augmented version of BNF (Backus-Naur Form). The difference between ABNF and standard BNF lies in naming rule, loop, selection, sequence independence and value range. IETF uses ABNF to define the packet format in various protocols, for example, SIP (Session Initiation Protocol).

When various protocols defined with ABNF are parsed, it is needed to describe and analyze the rule of the packet according to ABNF syntax.

ABNF syntax is defined in the following way:
Name = elements crlf;

In the above definition, "name" is rule name, "elements" is a sequence combined from one or more rule names or terminating symbols, "crlf" is carriage return & line feed, which represents the end of a line; "=" means "defined as", for separating the rule name and the rule definition.

ABNF has various operational characters, for representing the relation between the rule names or terminating symbols. There are four basic operational characters: connection, selection, loop and option. Most of the complex data structures may be described using the four operational characters, and the rest of the operational characters may be replaced by these four basic operational characters.

The features of ABNF rule and the meanings of the four basic operational characters will now be described in a simple example:
Rule = "a" *(Rule1) Rule2 [Rule3];
Rule1 = "b" | "c";
Rule2 = "de";
Rule3 = "f';

In the above rules, "*" refers to indefinite loop, which means that Rule1 may be repeated 0 time or infinite times; Rule2 has a connection relation with the preceding and subsequent rules; the component in square brackets ("[" and "]") is optional, which means that rule3 is an option; "b" and "c" in Rule1 are connected with "|", which refers to selection relation ("or" relation). In fact, the Rule defines a string pattern rule in ABNF syntax, which can match strings such as "abdef", "abbccdef", "ade", etc.

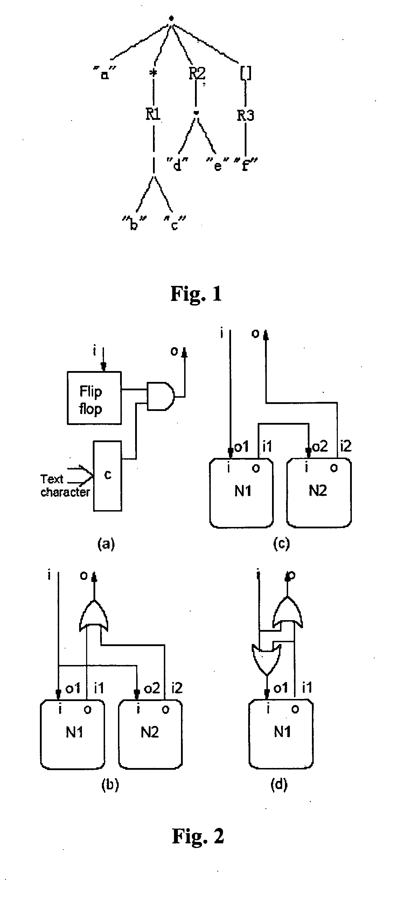

The syntax tree of Rule is shown in Fig.1. In the tree, the leaves are terminating symbols. In ABNF syntax, any terminating symbol is an ASCII code. Each node of the tree is an operational character or subrule name (which means calling the subrule) in ABNF syntax. In comparison with the normal expression (regular form) used for describing most of the computer languages, ABNF syntax is more abundant. In ABNF syntax, correlativity exists between some operational characters; for example, an option may be replaced by a selection relation when the rule is expressed. But these operational characters are all necessary, because ABNF is mainly used to describe data structure, and , at the same time when a structure rule is defined, it is also necessary to give out the domain values in the structure for being identified and retrieved by an upper layer. The expressing capacity of ABNF may be improved due to abundance of operational characters.

One of the known ABNF parsing solutions is realized with software on a general-purpose processor, and may be classified into two main categories. In one category, nested programs are used to directly describe a protocol rule expressed in ABNF, in nature, the protocol rule is directly embedded into the codes of the software. In the other category, some language identifying tools, such as Flex, Bison and so on, are used, and a protocol parser is generated automatically.

In the above two software-implemented solutions, the former is characterized in occupying relatively small storage space but poor in compatibility, that is, a new parser has to be re-developed once a new protocol appears. The latter is characterized in good compatibility and a syntax tree may be directly generated according to the protocol rule described in ABNF, but the storage space occupied is relatively large, the code efficiency is low, and the parsing speed is low.

When the above two software-implemented solutions are performed by a CPU, there are too many determination, skip and call processes, which frequently access discontinuous storage spaces, resulting in disadvantages of low efficiency and low processing speed, forming a serious bottleneck in the operation of the whole system. Especially for some network servers subject to connections of the order of one million in number and having huge throughput, pure software-implemented solution cannot meet the performance requirements.

At present, a hardware-implemented solution is provided for realizing high-speed character string matching, capable of performing high-speed matching on a character string of the type conforming to a normal expression.

There are three basic regular forms:

(1) r1|r2 represents a selection relation, and can match any string that meets rule r1 or rule r2;

(2) r1 r2 represents a connection relation;

(3) r1* represents a loop relation;

For example, a regular form ((a|b)*)(cd) may match strings "acd", "aabbcd", "cd", etc. A corresponding non-deterministic finite automaton (NFA) may be constructed for each regular form. A string the pattern rule of which may be described using a regular form can be matched by constructing an NFA using hardware logic. Fig.2 shows four basic logic structures: (a) the matching of single character; (b) r1|r2; (c) r1r2; and (d) r1*. Among the four basic logic structures, (a) is the most basic unit. In hardware implementation, character c may be realized by a comparator, and a Flip-flop may be used to transmit and receive the enable signal of the unit and to synchronize the whole circuitry. The physical connection lines between AND gate, OR gate and the unit describes the logic relation between them. Any regular form may be constructed by using these four basic logic structures.

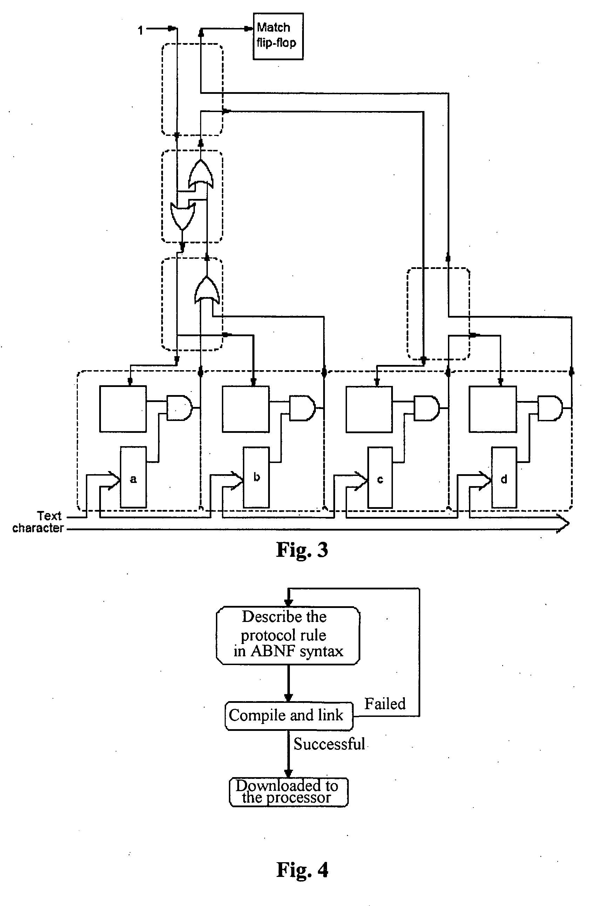

Fig.3 shows the logic structure of ((a|b)*) (cd). String pattern matching realized in such a concept may reach a very high speed. In comparison with a software-implemented solution, this solution may match strings in a speed of O (n), that is, for hardware implementation, one character may be processed in each clock cycle.

However, in such a solution, if many regular forms are constructed, too many hardware logic resources will be occupied because the corresponding modules cannot be multiplexed, and the cost will be too high. On the other hand, domain values cannot be retrieved easily in this solution, so this solution is difficult to be applied in parsing the content of a packet. For most of the application layer network protocols described in ABNF, for example, SIP (Session Initiation Protocol), the protocol rules are very huge in number, and there are many domain values, so such a technical solution is not applicable.

### Summary of the Invention

In view of the above defects in the prior art, it is an object of the invention to provide a method and a device for ABNF string pattern matching and parsing, by means of which pattern matching and parsing may be performed rapidly and effectively on any packet using a protocol rule that is described in ABNF syntax.

The object of the invention is realized in the following technical solutions:

The invention provides a method for ABNF string pattern matching and parsing, including steps of: A) establishing an ABNF instruction corresponding to an ABNF rule; B) compiling a protocol rule described in ABNF syntax into a protocol rule described with the ABNF instruction; and C) matching and parsing the string or protocol packet described in ABNF syntax based on the protocol rule described with the ABNF instruction.

The ABNF instruction may be a selection instruction, a loop instruction, an option instruction, a call instruction, a comparison instruction and a return instruction.

The return instruction may be a matching-success return instruction and a matching-failure return instruction.

The step B) may comprise: translating and synthesizing, by a compiler, the protocol rule described in ABNF syntax, and generating a protocol rule described with a machine instruction supported by a hardware processing chip.

The step C) may comprise: matching and parsing the string or protocol packet by the hardware processing chip.

The step C) may comprise: decoding the protocol rule described with the ABNF instruction and obtaining a control signal; and retrieving data to be compared; and comparing the above retrieved data to be compared with present data, and feeding back a comparison result.

The step C) may further comprise: saving a result of the matching and parsing performed on the protocol rule described with the ABNF instruction.

The method may further comprise: adopting a special parser to match and parse a specific string pattern rule.

Based on the above method, the invention further provides an apparatus for ABNF string pattern matching and parsing, comprising: a data storage space, for storing text data to be processed with ABNF string pattern matching and parsing; a program storage space, for storing an object code of a protocol rule sequence based on an ABNF instruction, wherein the object code of the protocol rule sequence is obtained by compiling a string pattern rule described in ABNF; a decoder, for decoding the object code of the protocol rule sequence stored in the program storage space to obtain a control signal, and for retrieving data to be compared from the program storage space, and providing the data to a comparator; and the comparator, for comparing the operand retrieved by the decoder from the program storage space with data in a present data space, and feeding back a comparison result.

The data storage space, the program storage space, the comparator and the decoder are connected via a bus.

The apparatus for ABNF string pattern matching and parsing may further comprise: a result output buffer module, which is connected to a control bus, for saving a result of matching and parsing processing carried out on the protocol rule sequence code.

The apparatus for ABNF string pattern matching and parsing may further comprise: a special parser, for matching a specific string pattern rule, which is implemented entirely with a hardware logic unit, wherein each special parser corresponds to a dedicated instruction, and a corresponding special parser is called by a respective dedicated instruction to parse a packet.

The apparatus for ABNF string pattern matching and parsing may further comprise a loop counter for providing an access address to the program storage space.

The apparatus for ABNF string pattern matching and parsing may further comprise a linked list stack for saving offset address information necessary to be designated for a selection instruction, a loop instruction and an option instruction.

It can be seen from the above technical solutions of the invention that in comparison with the software implementation, the invention will greatly improve the parsing efficiency since the invention is an ABNF decoder realized based on a hardware decoding chip. Moreover, in the invention, the ABNF instruction set may, in essence, be considered as a high-level language, and it substantially has a one-to-one correspondence relation with the ABNF syntax, so that the object code may be simpler, and may be implemented easily with hardware. Moreover, the compiler according to the invention may generate corresponding machine codes directly according to a protocol rule that is described in ABNF syntax, so a developer may directly use ABNF syntax to describe a protocol rule. Thus, the developing process is more convenient and automatic, the compatibility may be improved and the development period may be shortened. Therefore, the invention constructs a general-purpose and effective processor for string pattern matching and parsing.

### Brief Description of the Drawings

Fig.1 is a schematic diagram showing the structure of a syntax tree of Rule = "a" *(rule1) rule2 [rule3];

Fig.2 is a schematic diagram showing the four basic logic structures of a regular form;

Fig.3 is a schematic diagram showing the combined logic structure of Rule = "a" *(rule1) rule2 [rule3];

Fig.4 is a flow chart of the method according to the invention; and

Fig.5 is a schematic block diagram of the apparatus according to the invention.

### Detailed Description of the Embodiments

The invention mainly provides an implementation of a hardware decoder for string pattern matching and parsing based on ABNF syntax, which can perform quick pattern matching and parsing on any packet using a protocol rule that is described in ABNF syntax.

For a better understanding of the invention, embodiments of the method for ABNF string pattern matching and parsing according to the invention will be described first.

To realize the method of the invention, first of all, it is necessary to establish an ABNF instruction corresponding to an ABNF rule. The ABNF instruction may be: selection instruction, loop instruction, option instruction, call instruction, comparison instruction and return instruction. The return instruction may be matching-success return instruction and matching-failure return instruction. Moreover, when a selection instruction, a loop instruction or an "optional instruction" is applied, it is necessary to designate a corresponding offset address, respectively for indicating the length covered by the selection relation and the length covered by the loop relation, and for determining the end address of an option. The specific meanings of ABNF instruction set are described in the following table:

| Instruction Examples | Meaning Of Instructions |
|---|---|
| **or** [ornum] | To enter a selection relation; [ornum] is an offset address, representing the length covered by the selection relation. In execution, the processor compresses ornum into a linked data list as an address of a successful matching. |
| **cmp** 'c' | To compare data pointed by a pointer of present data space with 'c'. If the instruction is in a "sequential" state, data pointer is incremented when the matching is successful and the next instruction will be executed, and an address of an unsuccessful matching will be retrieved from the linked data list and assigned to a program pointer if the matching fails; if the instruction is in a selection state, the data pointer is incremented when the matching is successful and an address of the successful matching will be retrieved by the processor from the linked list data and assigned to the program pointer, and the next instruction will be executed if the matching fails. |
| **loop** [loopnum] | To enter a loop relation. [loopnum] is an offset address indicating the length covered by the loop relation. The processor may know the start address and end address of a loop according to the instruction, and then assign them to a loop counter. At the same time, before each loop, the instruction address of "**endloop**" is compressed into the linked data list as an unsuccessful address. |
| **endloop** | **Having** a one-to-one correspondence with the instruction **"loop",** indicating an end address of a loop relation. The processor just continues to execute the next instruction. |
| **opt** [optnum] | **I**ndicating that an option follows the instruction. [optnum] is an offset address, which is added to a counter of the present program, resulting an end address of the option, and the end address is compressed into a linked data list as an unsuccessful address. |
| **call** R | **R**epresenting calling. R is an absolute address of a subrule. If the present relation is a sequential relation, the processor compresses an address of the next instruction into a linked data list as a successful-matching address, and then skips to a program space pointed by R; if the present relation is a selection relation, the processor compresses an address of the next instruction into a linked data list as an unsuccessful-matching address, and then skips to R. |
| **error** | **I**ndicating that matching fails. The processor retrieves an unsuccessful-matching address from the linked data list and provides it to the program pointer. |
| **Ret** | Indicating that matching succeeds. The processor retrieves a successful-matching address from the linked data list and provides the successful-matching address to the program pointer. |
| | [ID] is an option, **"ret"** is in one-to-one correspondence with **"call".** When there exists an ID, it indicates that the value range of **"call"** needs to be recorded. [ID] represents the code corresponding to the value range. The value of the code is compiled and assigned by a compiler. |

With the above ABNF instruction set, a protocol rule described based on ABNF string may be compiled into a protocol rule sequence based on ABNF instructions. In other words, data text (protocol rule data text) to be matched and parsed is first described with ABNF strings, then the ABNF string is compiled based on the ABNF instructions; that is, the protocol rule that is described in ABNF syntax is translated and synthesized using a compiler, and a protocol rule described by machine instructions supported by a hardware processing chip is generated.

Finally, the protocol rule sequence based on ABNF instructions will be matched and parsed. Because the ABNF instructions are simple and easy to implement, the hardware implementation of the whole matching and parsing process will be more convenient. Thus, the efficiency and compatibility of the parsing process may be ensured.

It can be seen that in the invention, the format of an ABNF instruction is: operation_code [operand]. Some operands are implicit. For example, the instruction **cmp'c1'** has two operands in fact: one is characters 'c1', which are stored in the program space; the other is the content pointed by data pointer in a present data space;

The ABNF instruction set has a characteristic of having double exits. In other words, some instructions (such as or ,loop, etc.) are used for recording the address to be returned when the state is executed successfully or unsuccessfully, referred to as successful-matching address or unsuccessful-matching address, and compressed into a linked list stack. Some instructions (such as cmp) are used for determining, according to the execution result, to retrieve a successful-matching address or a unsuccessful-matching address from the linked list stack as a return address.

The invention further provides a hardware-implemented apparatus for ABNF string pattern matching and parsing. When the apparatus is used for developing a parsing software based on a new protocol rule, the ABNF rule is first compiled into an ABNF instruction sequence and then downloaded to the program space of a decoding chip, thus ready for use. The specific processing procedure is as shown in Fig.4. First of all, the protocol rule is described in ABNF syntax, and then the protocol rule is compiled and linked using the ABNF instruction set according to the invention. If the compilation fails, the protocol rule will be re-described using ABNF syntax, and compiled and linked again. If the compilation and linkage is successful, then the protocol rule sequence based on ABNF instructions may be matched and parsed using the apparatus of the invention, and thus the parsing result will be obtained.

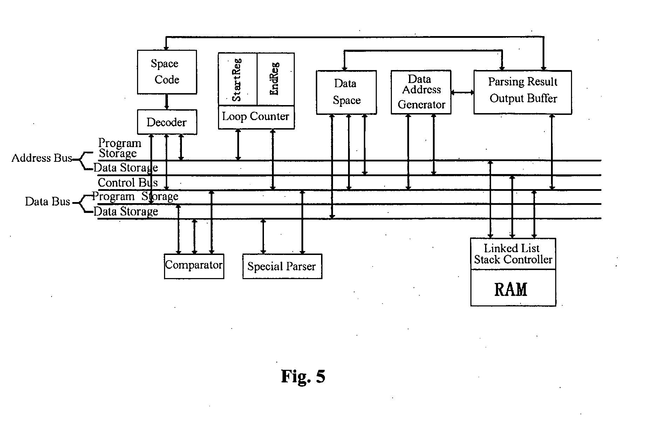

The apparatus for ABNF string pattern matching and parsing according to the invention will now be illustrated in conjunction with the drawings. As shown in Fig.5, the apparatus specifically includes:

1) a data storage space, i.e., data space, adapted to store text data on which ABNF string pattern matching and parsing are to be performed. The data storage space acts as a buffer for the packet to be parsed;

2) a program storage space, i.e., a code space, adapted to store an object code of the protocol rule sequence based on ABNF instructions, which object code is obtained by compiling the string pattern rule described in ABNF; in other words, the code space (i.e., program storage space) is adapted to store an object code that describes the protocol rule;

3) a loop counter adapted to generate an address of the program storage space. To improve the address generation efficiency, in addition to the functions of an ordinary counter, the loop counter also supports loop instruction. The loop counter uses two register files, i.e., StartReg file and EndReg file, for storing the start count value and the end count value of the counter, respectively. The counter counts up from the start value, and when it reaches the end value, the counter re-counts up again from the start value automatically. When StartReg0=0x0000 and EndReg=0xffff, the function of the loop counter is the same as that of an ordinary counter;

4) a decoder adapted to decode the machine codes stored in the program storage space, to provide a control signal to each storage space and a comparator, a special parser, the loop counter, data address generator and a parsing result output buffer, and to provide comparison data to a comparator;

5) the comparator adapted to perform comparison processing on protocol rules except specific protocol rules and obtain a matching and parsing result. Specifically, the comparator is specially adapted to support the cmp (compare) instruction and compare an operand retrieved by the decoder from the program space with the data in the present data space, and then feed back the comparison result;

6) the special parser, arranged based on a specific protocol rule. It is specialized in constructing a non-deterministic finite automaton using hardware logic directly for common module rules in the protocol, and it is specialized in parsing specific common rule patterns, for example, parsing the string of IPV4 or IPV6 address pattern rule. The special parser is connected to the data bus and control bus of the processor. A pattern rule necessary to be parsed by the special parser corresponds to dedicated instructions. When calling these instructions, the processor directly calls the special parser to parse present packet data. Thus, when a usual module rule in the protocol is parsed, the packet parsing speed may be improved greatly by using the special parser. The special parser may be customized depending on the application of the processor. For example, if the processor is applied in parsing a SIP protocol, a special processor may be customized according to the features of the SIP protocol, so that the parsing speed may be improved. The module of the special parser of the invention may be based on the concept shown in Fig.3, and will not be described again here;

7) the result output buffer module, adapted to save a result of matching and parsing the protocol rule sequence code. Specifically, in parsing a packet in a dater buffer, the location (address) of the domain value to be retrieved and the error information are recorded;

8) a linked list stack adapted to save an offset address necessary to be designated for the selection instruction, loop instruction or option instruction, and a return address of an instruction (call) calling a subrule. These addresses may be a matching-success return address or a matching-failure return address.

Specifically, the linked list stack includes a linked list stack controller and an RAM. The linked list stack is a key module supporting the ABNF instruction set. Some ABNF instructions are operational characters directly interpreting the ABNF syntax, and require to record an address necessary to be returned when a present matching succeeds or fails. The linked list stack is adapted to store the successful-matching address and the unsuccessful-matching address according to a data structure, so as to facilitate rapid addressing in the code space by the parser.

The apparatus of the invention employs an enhanced Harvard structure; in other words, the data storage space, the program storage space, the matching and parsing processor (including the special parser and the comparator), the result output buffer module and the linked list stack controller are connected with five independent buses, so that the efficiency of accessing the storage may be improved. The five buses include two address buses, two data buses and one control bus. The two address buses are a data storage address bus and a program storage address bus respectively, and the two data buses are a data storage data bus and a program storage data bus respectively.

As will be readily seen, the ABNF instruction set plays an important role in the implementation of the invention. The use of the ABNF instruction set will now be illustrated in conjunction with the following specific examples.

a) Sequential Relation

1) For rule R: R = R1 R2, the description is as follows:

| | |
|---|---|
| call | R1 |
| call | R2 |
| ret | |

In the above, R1 and R2 are protocol rules described with ABNF strings. The same below;

2) For rule R: R = 'c1' ' c2', the description is as follows:

| | |
|---|---|
| cmp | 'c1' |
| cmp | 'c2' |
| ret | |

In the above, C1 and C2 are specific ABNF strings. The same below;

b) Selection Relation

1) For rule R: R = R1 | R2, the description is as follows:

| | |
|---|---|
| or [ornum] | |
| call | R1 |
| call | R2 |
| error | |
| ret | |

2) For rule R: R = 'c1' | 'c2', the description is as follows:

| | |
|---|---|
| or [ornum] | |
| cmp | 'c1' |
| cmp | 'c2' |
| error | |
| ret | |

c) Loop Relation

1) For rule R: R = *(R1), the description is as follows:

| | |
|---|---|
| loop [loopnum] | |
| call | R1 |
| endloop | |
| ret | |

2) For rule R: R = * (c1), the description is as follows:

| | |
|---|---|
| loop [loopnum] | |
| cmp | 'c1' |
| endloop | |
| ret | |

d) Option

1) For rule R: R = R1 [R2]R3, the description is as follows:

| | |
|---|---|
| call | R1 |
| opt [optnum] | |
| call | R2 |
| call | R3 |
| ret | |

2) For rule R: R= c1[c2]c3, the description is as follows:

| | |
|---|---|
| cmp | 'c1' |
| opt | [optnum] |
| cmp | 'c2' |
| cmp | 'c3' |
| ret | |

Based on the above ABNF instruction set, another specific ABNF rule is taken as an example. The form, described using the ABNF instruction set, of the another specific rule will now be described:

| | | |
|---|---|---|
| Rule = "abc" *(rule1) rule2 [rule3] | | ; rule name and its definition |
| Rule: cmp 'a' | | |
| | cmp 'b' | |
| | cmp 'c' | |
| | loop [loopnum] | |
| | call Rule1; | |
| | endloop | |
| | call Rule2 | |
| | opt [optnum] | |
| | call Rule3 | |
| | ret | |
| Rule1 = "d" \| "e" | | ; subrule name and its definition |
| Rule1: or [ornum] | | |
| | cmp 'd' | |
| | cmp 'e' | |
| | error | |
| | ret | |
| Rule2 = "f" | | ; subrule name and its definition |
| Rule2: | cmp 'f' | |
| | ret | |
| Rule3 = "gh" | | ; subrule name and its definition |
| Rule3: | cmp 'g' | |
| | cmp 'h' | |
| | ret | |

The ABNF decoder based on hardware decoding chip may bring about the following advantageous effects.

A processor for high-speed string pattern matching and parsing may be provided and may be applied in a large-scale network server for validity-checking and parsing the packets encoding an application-layer text. In comparison with the traditional method implemented with software, the speed of matching and parsing is improved greatly.

The ABNF instruction set in nature is equivalent to a high-level language corresponding to the ABNF syntax. In the invention, a compiler of this language is realized, which may generate a rule described with instructions and machine codes of the processor according to the protocol rule described in the ABNF syntax. Therefore, when a developer develops a new protocol, he can directly use the ABNF syntax to describe the rule of the protocol, without necessity of describing the rule with the instruction set. Thus, the development period may be shortened, and the development cost may be lowered.

Preferred embodiments of the invention have been described above, nevertheless, the protection scope of the invention is not intended to be limited thereto, but shall cover various modifications, variations and replacements readily occurring to those skilled in the art after reading the present disclosure. Therefore, the protection scope of the invention shall be defined by the appended claims.

## Claims

1. A method for Augmented Backus-Naur Form string pattern matching and parsing, comprising steps of:
A) establishing an Augmented Backus-Naur Form instruction corresponding to an Augmented Backus-Naur Form rule;
B) compiling a string or a protocol packet described in Augmented Backus-Naur Form syntax into a protocol rule described with the Augmented Backus-Naur Form instruction; and
C) matching and parsing the string or protocol packet described in Augmented Backus-Naur Form syntax based on the protocol rule described with the Augmented Backus-Naur Form instruction.

2. The method for Augmented Backus-Naur Form string pattern matching and parsing according to Claim 1, wherein step A) comprises establishing a selection instruction, a loop instruction, an option instruction, a call instruction, a comparison instruction and a return instruction.

3. The method for Augmented Backus-Naur Form string pattern matching and parsing according to Claim 2, wherein establishing the return instruction comprises establishing a matching-success return instruction and a matching-failure return instruction.

4. The method for Augmented Backus-Naur Form string pattern matching and parsing according to Claim 2, wherein step B)comprises: designating a corresponding offset address when using the selection instruction, the loop instruction or the option instruction, wherein the offset address is respectively used for indicating a length covered by the selection relation and a length covered by the loop relation, and for determining an end address of an option.

5. The method for Augmented Backus-Naur Form string pattern matching and parsing according to Claim 1, wherein step B) comprises: translating and synthesizing, by a compiler, the protocol rule described in Augmented Backus-Naur Form syntax, and generating a protocol rule described with a machine instruction supported by a hardware processing chip.

6. The method for Augmented Backus-Naur Form string pattern matching and parsing according to anyone of Claims 1-5, wherein step C) comprises: matching and parsing the string or protocol packet by the hardware processing chip.

7. The method for Augmented Backus-Naur Form string pattern matching and parsing according to Claim 6, wherein step C) comprises:
decoding the protocol rule described with the Augmented Backus-Naur Form instruction and obtaining a control signal; and retrieving data to be compared; and
comparing the retrieved data to be compared with present data, and feeding back a comparison result.

8. The method for Augmented Backus-Naur Form string pattern matching and parsing according to Claim 7, wherein step C) further comprises: saving a result of the matching and parsing performed on the protocol rule described with the Augmented Backus-Naur Form instruction.

9. The method for Augmented Backus-Naur Form string pattern matching and parsing according to Claim 8, further comprising: adopting a special parser to match and parse a specific string pattern rule.

10. An apparatus for Augmented Backus-Naur Form string pattern matching and parsing, comprising:
a data storage space, for storing text data to be processed with Augmented Backus-Naur Form string pattern matching and parsing;
a program storage space, for storing an object code of a protocol rule sequence based on an Augmented Backus-Naur Form instruction, wherein the object code of the protocol rule sequence is obtained by compiling a string pattern rule described in Augmented Backus-Naur Form;
a decoder, for decoding the object code of the protocol rule sequence stored in the program storage space to obtain a control signal, and for retrieving data to be compared from the program storage space, and providing the data to a comparator; and
the comparator, for comparing the data to be compared, which is retrieved by the decoder from the program storage space, with data in a present data space, and feeding back a comparison result.

11. The apparatus for Augmented Backus-Naur Form string pattern matching and parsing according to Claim 10, wherein the data storage space, the program storage space, the comparator and the decoder are connected via a bus.

12. The apparatus for Augmented Backus-Naur Form string pattern matching and parsing according to Claim 10, further comprising a result output buffer module, which is connected to a control bus, for saving a result of matching and parsing processing carried out on the object code of the protocol rule sequence.

13. The apparatus for Augmented Backus-Naur Form string pattern matching and parsing according to anyone of Claims 10-12, further comprising a special parser, for matching a specific string pattern rule, which is implemented entirely with a hardware logic unit, wherein each special parser corresponds to a dedicated instruction, and a corresponding special parser is called by a respective dedicated instruction to parse a packet.

14. The apparatus for Augmented Backus-Naur Form string pattern matching and parsing according to Claim 13, further comprising a loop counter for providing an access address to the program storage space.

15. The apparatus for Augmented Backus-Naur Form string pattern matching and parsing according to Claim 13, further comprising a linked list stack for saving offset address information designated for a selection instruction, a loop instruction and/or an option instruction.
